# EUROPEAN PATENT APPLICATION

(11) **EP 4 303 990 A1**
(43) Date of publication of application: **10.01.2024**
(21) Application number: 22763342.7
(22) Date of filing: 02.03.2022
(51) Int. Cl.: H01M 50/204

(54) **BATTERY UNIT**

(30) Priority: 03.03.2021 JP 2021033858
(71) Applicant: Asahi Kasei Advance Corporation, Tokyo 105-0004 (JP)
(72) Inventor: ARAKAWA, Ryu, Tokyo 100-0006 (JP); SEKI, Toru, Tokyo 100-0006 (JP)
(74) Representative: dompatent von Kreisler Selting Werner - Partnerschaft von Patent- und Rechtsanwälten mbB
(86) International application number: PCT/JP2022/008929
(87) International publication number: WO 2022/186289

(57) **Abstract**

Provided is a cell characterized in that at least a part of a cell surface is covered by flame resistant fibers, and in that the flame resistant fibers are in direct contact with the cell surface and/or are separated from the cell surface.

## Description

### FIELD

The present invention relates to a battery, a battery unit, and the like.

### BACKGROUND

Electricity storage devices (sometimes called batteries) such as lithium ion secondary batteries are widely used in mobile equipment, tools, construction machines, automobiles, marine vessels, railways, aircraft, and the like. Batteries are known to potentially cause thermal runaway due to damage, internal short-circuiting, external stress, and the like, thereby resulting in problems such as combustion, smoking, explosion, and degradation.

Not only a single battery (sometimes called cell), but also an assembled battery including cells (also sometimes called cell unit, cell stack, cell assembly, electricity storage module, cell pack, battery pack, or the like) is used for applications where high-capacity/high-output batteries are mounted, such as vehicles. In the case of a cell unit, there is the risk that any problem described above in one cell may spread to an adjacent cell or a cell unit outer package. A flame spreading resistance test can also be carried out in accordance with the safety standards for lithium ion secondary batteries. In order to prevent the occurrence of problems in a flame spreading resistance test, studies have been carried out for the purpose of preventing or inhibiting heat in a cell in a state of thermal runaway or an abnormally high temperature from spreading to another surrounding cell or outer package.

For example, PTL 1 discloses that a resin molded article including a resin and expansive graphite, together with a pressure-sensitive adhesive, is bonded to a cell, and placed between adjacent cells in a cell unit.

PTL 2 discloses that a heat-resistant/heat-insulating sheet including an inorganic fiber and a clay mineral is stacked on the outermost layer of a cell stack, and placed between cells in a cell unit.

PTL 3 discloses a flame-resistant sheet provided with a substrate including a glass fiber and a wet-heat-adhesive binder fiber, and an inorganic particle layer, and also proposes a cell pack including the sheet.

PTL 4 discloses that a heat-insulating sheet is produced by impregnating a non-woven fabric with a basic sol produced by addition of carbonate to a water glass composition, to generate a hydrogel-non-woven fabric composite, and drying and removing a liquid included in the composite, and the heat-insulating sheet produced is placed between an electronic component which may be thermogenetic, and a housing.

### [CITATION LIST]

### [PATENT LITERATURE]

PTL 1: Japanese Unexamined Patent Publication (Kokai) No. 2019-131654
PTL 2: Japanese Unexamined Patent Publication (Kokai) No. 2020-165065
PTL 3: Japanese Unexamined Patent Publication (Kokai) No. 2020-191274
PTL 4: Japanese Unexamined Patent Publication (Kokai) No. 2020-193413

### SUMMARY

### [TECHNICAL PROBLEM]

A resin molded article including a resin, graphite, a clay mineral, and the like, for example, a resin sheet may be lost in handleability, productivity, or battery characteristics due to its weight, in incorporation thereof into a cell or cell unit, production of a cell or cell unit, and a post-processing process.

A flame-resistant/heat-insulating sheet including an inorganic fiber, for example, a glass fiber, or an inorganic substance, for example, a glass material may be molten due to melt viscosity of the inorganic fiber, in a cell, cell unit or cell stack in a state of thermal runaway or an abnormally high temperature.

While it may also be considered that a flame-resistant/heat-insulating sheet is increased in weight or thickness to thereby physically prevent thermal runaway or flame spreading of an electricity storage module, the electricity storage module is disposed in a variety of equipment, and thus is limited in installation space and restricted in dimension. The electricity storage module, as is increased in capacity, is also expected to have both increased flame spreading resistance and be reduced in size.

In view of the problems about conventional flame-resistant/heat-insulating materials, an object of the present invention is to provide a cell and a cell unit each having assured flame spreading prevention properties and desired battery characteristics.

### [SOLUTION TO PROBLEM]

The problems described above are solved by the following technical solutions.
<1>
   A cell, wherein at least one portion of a cell surface is covered with a flame-resistant fiber, and the flame-resistant fiber is in direct contact with the cell surface and/or is apart from the cell surface.
<2>
   The cell according to Item 1, wherein the entire of the cell is covered with the flame-resistant fiber.
<3>
   The cell according to Item 1, wherein the cell is partially covered with the flame-resistant fiber.
<4>
   The cell according to Item 1, wherein the cell is directly covered with the flame-resistant fiber.
<5>
   The cell according to Item 1, wherein the cell is indirectly covered with the flame-resistant fiber.
<6>
   The cell according to any one of Items 1 to 5, wherein the flame-resistant fiber is placed inside and/or outside an outer package of the cell.
<7>
   The cell according to any one of Items 1 to 6, wherein the flame-resistant fiber is in the form of a sheet, paper, a woven fabric, a knit fabric, a non-woven cloth, or felt.
<8>
   The cell according to Item 7, wherein the flame-resistant fiber in the form of the felt, and the felt has a thickness of 1 to 10 mm, a basis weight of 100 to 600 g/m², and a bulk density of 55 to 90 kg/m³.
<9>
   The cell according to any one of Items 1 to 8, wherein the flame-resistant fiber is an organic fiber having flame retardance, heat resistance, and prevention properties of flame spreading.
<10>
   A cell unit, wherein an assembly of a plurality of the cells according to any one of Items 1 to 9 is covered with the flame-resistant fiber.
<11>
   A cell unit, wherein an assembly of a plurality of cells is covered with a flame-resistant fiber.
<12>
   The cell unit according to Item 11, wherein the entire of the assembly or the entire of the cell unit is covered with the flame-resistant fiber.
<13>
   The cell unit according to Item 11, wherein the assembly or the cell unit is partially covered with the flame-resistant fiber.
<14>
   The cell unit according to Item 11, wherein the assembly or the cell unit is directly covered with the flame-resistant fiber.
<15>
   The cell unit according to Item 11, wherein the flame-resistant fiber is sandwiched between the cells.
<16>
   The cell unit according to Item 11, wherein the cell unit includes a plurality of the assemblies, and the flame-resistant fiber is sandwiched between the assemblies.
<17>
   The cell unit according to any one of Items 11 to 16, wherein the assembly or the cell unit is accommodated in a housing, and the flame-resistant fiber is placed inside and/or outside the housing.
<18>
   The cell unit according to any one of Items 11 to 17, wherein the flame-resistant fiber is in the form of a sheet, paper, a woven fabric, a knit fabric, a non-woven cloth, or felt.
<19>
   The cell unit according to Item 18, wherein the flame-resistant fiber is in the form of the felt, and the felt has a thickness of 1 to 10 mm, a basis weight of 100 to 600 g/m², and a bulk density of 55 to 90 kg/m³.
<20>
   The cell unit according to any one of Items 11 to 19, wherein the flame-resistant fiber is an organic fiber having flame retardance, heat resistance, and prevention properties of flame spreading.
<21>
   A cell unit, wherein a single cell or an assembly of a plurality of cells, and the cell unit according to any one of Items 11 to 20 are covered with the flame-resistant fiber.
<22>
   A cell unit, wherein the cell according to any one of Items 1 to 9 and the cell unit according to any one of Items 10 to 20 are covered with the flame-resistant fiber.

### [ADVANTAGEOUS EFFECTS OF INVENTION]

The present invention can provide a cell and a cell unit each having assured flame spreading prevention properties, and desired battery characteristics.

### DESCRIPTION OF EMBODIMENTS

Hereinafter, embodiments of the present invention will be described in detail, but the present invention is not limited to the following embodiments and various variations can be carried out.

### <Definition>

The "cell" herein refers to a single battery, and means a minimum constituent unit of a battery, in which a positive electrode material, a negative electrode material, a separator, a positive electrode terminal, a negative electrode terminal, and the like are housed in an outer package.

The "assembly" herein refers to a collected product of a plurality of cells, the "cell unit" herein refers to an assembled battery including the assembly, and the cell unit may also be called an "electricity storage module" when accommodated in a housing. The cell unit may also be called a "cell stack" when cells are stacked, or called a "battery pack" when a plurality of electricity storage modules is housed in a housing. An assembly and a cell unit may each include, if necessary, any member to be electrically connected to a cell, such as an electric connection cable and/or a lead tab, in addition to the cell, inside the assembly and cell unit.

The "flame-resistant fiber" herein refers to a fiber obtained by heat treatment of an organic fiber in an oxidizing atmosphere, or is also sometimes called "oxidized fiber" or "infusible fiber". A flame-resistant fiber is obtained, for example, in a flame-resisting step as an initial or upstream step in a process for producing a carbon fiber.

The "cover" herein refers to covering at least one portion of a surface of an object with another object, and encompasses entirely, continuously, regularly, irregularly, or periodically covering a surface of an object, regardless of whether or not the object and another object are in direct contact with each other.

The term "flame spreading" herein refers to flame spreading from other fire origin located around a subject, to the subject, and is also called "catching fire". The term "spreading burning" herein refers to burning of a subject by the flame spreading, while the term "fire spreading" herein refers to spreading of a fire occurring with a subject as a fire origin, to the periphery of the subject.

### <First embodiment>

A first embodiment provides a cell in which at least one portion of a cell surface is covered with a flame-resistant fiber and the flame-resistant fiber is in direct contact with the cell surface and/or is apart from the cell surface. A cell in which at least one portion of a cell surface is directly or indirectly covered with a flame-resistant fiber not only enhances in flame resistance of the cell itself with battery characteristics such as output characteristics, capacity characteristics, and cycle stability being ensured, but also can allow for prevention or inhibition of flame spreading from a fire origin, for example, a surrounding member, for example, another surrounding cell or cell unit, an outer package, an electrode, an electrolyte or an electrolytic solution, an electrode terminal, a cable, a housing or a connection terminal of an electricity storage module, electronic equipment, a tool, and/or a vehicle, or fire spreading to any surrounding member with the cell as a fire origin.

### <Second embodiment>

A second embodiment provides a cell unit, in which an assembly of a plurality of cells is covered with a flame-resistant fiber. The assembly covered directly or indirectly with the flame-resistant fiber in the cell unit not only allows for an enhancement in flame resistance of the cell unit itself with battery characteristics such as output characteristics, capacity characteristics, and cycle stability being ensured, but also can allow for prevention or inhibition of flame spreading from a fire origin, for example, a surrounding member, for example, a surrounding cell, another assembly or another cell unit, an outer package, an electrode, an electrolyte or an electrolytic solution, an electrode terminal, cable, a housing or a connection terminal of an electricity storage module, electronic equipment, a tool, and/or a vehicle, or fire spreading to any surrounding member with the cell as a fire origin.

### (Cell)

The cell includes an outer package, and at least one pair of positive and negative electrodes accommodated in the outer package, and may optionally include at least one selected from the group consisting of a positive electrode terminal, a negative electrode terminal, a separator, an electrolyte, and an electrolytic solution.

Examples of the cell include secondary batteries such as a lithium ion secondary battery, a nickel-hydrogen battery, a lithium-sulfur battery, a nickel-cadmium battery, a nickel-iron battery, a nickel-zinc battery, a sodium-sulfur battery, a lead storage battery, an air battery, an all-solid-state battery, and an all-resin battery, and in particular, a lithium ion secondary battery is preferable from the viewpoint of the effects of the invention.

The cell preferably has at least one configuration represented by the following (c1) to (c5) from the viewpoint of the effects of the invention:
(c1) a configuration in which the entire of the cell is covered with a flame-resistant fiber, for example, a mode in which the cell is packaged by a molded article of a flame-resistant fiber, or the entire of an outer package of the cell includes a flame-resistant fiber;
(c2) a configuration in which the cell is partially covered with a flame-resistant fiber, for example, a mode in which only one portion of the cell is covered with a flame-resistant fiber, for example, only one surface of the cell is covered with a molded article of a flame-resistant fiber, a molded article of a flame-resistant fiber is sandwiched between adjacent such cells, or only a curved section of a cylindrical outer package of the cell is covered with a molded article of a flame-resistant fiber;
(c3) a configuration in which the cell is directly covered with a flame-resistant fiber, for example, a mode in which a material involving in charge and discharge of the cell, such as a positive electrode material, a negative electrode material, a separator, a positive electrode terminal, a negative electrode terminal, and/or an electrolyte is in direct contact with a flame-resistant fiber or its molded article;
(c4) a configuration in which the cell is indirectly covered with a flame-resistant fiber, for example, a mode in which a material involving in charge and discharge of the cell is not in in direct contact with a flame-resistant fiber or its molded article, for example, a flame-resistant fiber or its molded article is placed outside an outer package of the cell, a non-flame-resistant member is sandwiched between a molded article of a flame-resistant fiber and the cell, or a flame-resistant fiber or its molded article is inserted between cells in which a material involving in charge and discharge is accommodated in an outer package; and
(c5) a configuration in which a flame-resistant fiber is placed inside and/or outside an outer package of the cell.

The configurations represented by (c1) to (c5) described above may co-exist or may be overlapped in a single cell, as exemplified.

### (Flame-resistant fiber)

In the first or second embodiment, at least one portion of the cell surface, or at least one portion of the assembly is covered with a flame-resistant fiber. The flame-resistant fiber can be entirely, partially, continuously, regularly, irregularly, or periodically placed on the cell surface or the assembly. In particular, the entire cell or assembly is preferably enclosed with a molded article of the flame-resistant fiber from the viewpoint of the effects of the present invention being efficiently exerted.

The flame-resistant fiber may be in direct contact with the cell surface or the assembly outer surface, or may be placed apart from the cell surface or the assembly as long as the cell surface or the assembly can be covered with the flame-resistant fiber. Another cell, another assembly, a connection component, an adhesive or a binder material may be present between the flame-resistant fiber and a surface to be covered.

The flame-resistant fiber is commonly non-inflammable or infusible in the air, and is one organic fiber having flame resistance. The flame-resistant fiber may optionally have heat resistance, chemical resistance, plasticity, lightweight properties, soft texture, insulation properties, etc.

The flame-resistant fiber is preferably an organic fiber having flame retardance, heat resistance, and prevention properties of flame spreading, from the viewpoint of prevention of spreading burning or fire spreading, and is preferably an organic fiber having flame retardance, heat resistance, and chemical resistance, from the viewpoint of safety. The limiting oxygen index (LOI) of the flame-resistant fiber, as measured according to JIS K7201, is preferably 40 or more, more preferably in the range of 50 to 60, from the viewpoint of prevention of spreading burning or fire spreading, and safety of the cell.

When the flame-resistant fiber has lightweight properties, the specific gravity of the flame-resistant fiber is preferably 1.2 to 1.6, more preferably 1.3 to 1.5, further preferably 1.4±0.5 based on the density of water.

When a molded product including the flame-resistant fiber has soft texture, the bending resistance of the molded product is preferably 50 to 150 mm, more preferably 60 to 120 mm, with respect to a non-woven cloth, or felt, as measured with a cantilever type bending resistance tester according to JIS L 1096, JIS L 1912, or JIS L 1913.

The raw material of the organic fiber is not particularly limited, and examples thereof include a heat-carbonizing polymer to be converted into carbon due to calcining.

The raw material of the heat-carbonizing polymer can be, for example, an acrylic resin such as polyacrylonitrile, cellulose, a phenolic resin, a PBO resin such as poly p-phenylenebenzobisoxazole (PBO), an aromatic polyamide (aramid)-based resin, an epoxy resin, or a pitch-based resin. Such a raw material is used as a raw material in a carbon fiber production process, and is a flame-resisting fiber oxidized/stabilized by heating treatment of the above raw material fiber at a temperature ranging from 200 to 400°C in an oxidizing atmosphere, for example, air. In the present invention, a fiber oxidized/stabilized and made of an acrylic resin is particularly preferable.

The flame-resistant fiber preferably contains, from the viewpoint of the effects of the invention, a flame-resisting structure represented by the following formula (I): 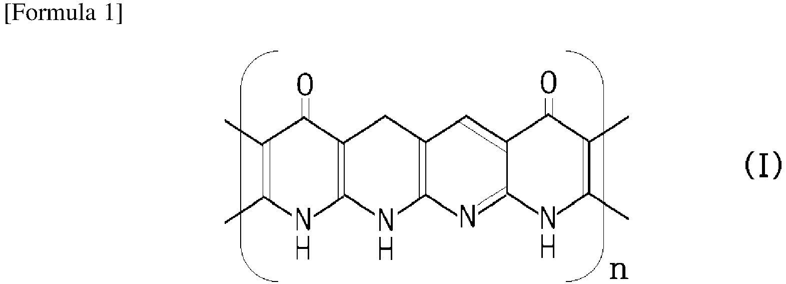
wherein n is an integer of 1 or more;
more preferably contains such a structure as a repeating unit (in formula (I), n ≥ 2).

The repeating unit of the flame-resisting structure represented by the formula (I) may be contained in the flame-resistant fiber in a random or block manner, and may be contained in the above-mentioned heat-carbonizing polymer in a random or block manner. A preferred atom composition (% by mol) of the flame-resistant fiber containing the repeating unit of the flame-resisting structure represented by the formula (I) has 60 to 65% of a carbon atom (C), 1 to 5% of a hydrogen atom (H), 16 to 24% of a nitrogen atom (N), and 10 to 18% of an oxygen atom (O), and a more preferred atom composition (% by mol) thereof has 61 to 64% of C, 2 to 4% of H, 18 to 22% of N, and 12 to 16% of O.

The flame-resistant fiber containing the repeating unit of the flame-resisting structure represented by the formula (I) is not particularly limited, and is obtained by, for example, cyclization and/or oxidation treatment of an acrylic resin such as polyacrylonitrile (PAN) and, if necessary, carbonization treatment thereof so that a predetermined atom composition is achieved.

The flame-resistant fiber is preferably in the form of a sheet, paper, a woven fabric, a knit fabric, a non-woven cloth, or felt, more preferably in the form of a sheet, a non-woven cloth, or felt, further preferably in the form of felt, from the viewpoint of enclosure of the cell or the assembly with a molded article of the flame-resistant fiber. The sheet in the present invention is a woven fabric coated with silicon. The felt in the present invention is one non-woven cloth obtained by fiber confounding and integration with treatment for fiber entanglement, such as needle punching or columnar flow punching (spun lacing). The dimension of the sheet, the paper, the woven fabric, the knit fabric, the non-woven cloth or the felt including the flame-resistant fiber can be determined depending on the covering area and the covering unit of the cell or the assembly.

A fiber structure article, for example, the sheet, the paper, the woven fabric, the knit fabric, the non-woven cloth or the felt including the flame-resistant fiber, which is obtained by processing the above flame-resisting fiber oxidized/stabilized, into a fiber structure article shape, is also obtained by forming the raw material fiber into a fiber structure article in advance and then heat-treating the resultant. According to this procedure, the entire fiber structure article is in contact with air heated and each fiber constituting the fiber structure article consequently has flame resistance and then the entire fiber structure article naturally has uniform flame resistance.

The sheet including the flame-resistant fiber preferably has a thickness of 0.6 to 1.2 mm, more preferably has a thickness of 0.7 to 1.1 mm, and/or preferably has a basis weight of 350 to 830 g/m², more preferably has a basis weight of 380 to 800 g/m², from the viewpoint of the effects of the invention.

The woven fabric including the flame-resistant fiber preferably has a thickness of 0.5 to 1.1 mm, more preferably has a thickness of 0.6 to 1.0 mm, and/or preferably has a basis weight of 200 to 500 g/m², more preferably has a basis weight of 250 to 450 g/m², from the viewpoint of the effects of the invention.

The paper, the woven fabric, the knit fabric, the felt or the non-woven cloth including the flame-resistant fiber is preferably coated with silicon according to a method such as sputtering, a knife coater, or a rotary screen, etc., from the viewpoint of protection from spark.

The woven fabric including the flame-resistant fiber is obtained by, for example, forming a flame-resistant fiber obtained by oxidation/stabilization of an acrylic fiber in air at 200 to 400°C, into a sheet, or weaving the flame-resistant fiber, and optionally coating the resultant with silicon.

The paper including the flame-resistant fiber preferably has a thickness of 0.1 to 3.0 mm, more preferably has a thickness of 0.1 to 1.5 mm, and/or preferably has a basis weight of 10 to 300 g/m², more preferably has a basis weight of 10 to 150 g/m², from the viewpoint of the effects of the invention.

The paper including the flame-resistant fiber is obtained by, for example, screening a paper raw material including a flame-resistant fiber obtained by oxidation/stabilization of an acrylic fiber in the air at 200 to 400°C, and optionally other pulp raw material, and optionally coating the resulting paper with silicon, in a paper manufacturing process including raw material preparation, papermaking, processing, finishing, and the like. Alternatively, the paper may be obtained by screening a paper raw material including the flame-resistant fiber coated with silicon in advance, and optionally other pulp raw material.

The non-woven cloth including the flame-resistant fiber preferably has a thickness of 0.4 to 0.9 mm, more preferably has a thickness of 0.5 to 0.8 mm, from the viewpoint of the effects of the invention.

The non-woven cloth including the flame-resistant fiber preferably has a basis weight of 30 to 90 g/m², more preferably has a basis weight of 40 to 80 g/m², from the viewpoint of the effects of the invention.

The non-woven cloth including the flame-resistant fiber preferably has any combination of the above-described thickness and basis weight, from the viewpoint of the effects of the invention. A binder material may be attached to the non-woven cloth including the flame-resistant fiber in order to facilitate covering of the cell or the assembly, or a resin for morphological stabilization, such as an acrylic resin, may also be attached thereto by a method such as dipping, spraying, or coating.

The felt including the flame-resistant fiber preferably has a thickness of 1 to 10 mm, more preferably has a thickness of 2 to 8 mm, further preferably has a thickness of 2 to 6 mm, from the viewpoint of the effects of the invention.

The felt including the flame-resistant fiber preferably has a basis weight of 100 to 600 g/m², more preferably has a basis weight of 110 to 550 g/m², further preferably has a basis weight of 130 to 500 g/m², from the viewpoint of the effects of the invention.

The felt including the flame-resistant fiber preferably has a bulk density of 55 to 90 kg/m³, more preferably has a bulk density of 58 to 86 kg/m³, further preferably has a bulk density of 60 to 82 kg/m³, from the viewpoint of the effects of the invention.

The felt including the flame-resistant fiber preferably has a volume resistivity of 10⁸ to 10¹² Ω·cm, more preferably has a volume resistivity of 10⁸ to 10¹⁰ Ω·cm, in terms of volume resistivity measured according to JIS K 6911, from the viewpoint of the effects of the invention.

The felt including the flame-resistant fiber preferably has any combination of the above-described thickness, basis weight, and bulk density, from the viewpoint of the effects of the invention.

The non-woven cloth or the felt including the flame-resistant fiber is obtained, for example, by shaping a flame-resistant fiber obtained by oxidation of an acrylic fiber in air at 200 to 400°C, into a cloth, by needle punching or spun lacing, or obtained by shaping an acrylic fiber into a cloth, by needle punching or spun lacing, and then oxidizing/stabilizing the cloth in air at 200 to 400°C. Properties can be appropriately adjusted by suitably controlling conditions of fiber oxidation treatment, conditions of fiber entanglement to a needle, and the like.

Specific examples of a molded article of a heat-resistant fiber are not particularly limited, and include a sputtered sheet of "LASTAN (registered trademark)" series manufactured by Asahi Kasei Advance Corporation, or a non-woven cloth (TOP 5150Z or the like) or felt (TOP 8150Z or the like) of "NEWLASTAN (registered trademark)" series manufactured by Asahi Kasei Advance Corporation.

A sputtered sheet of "LASTAN (registered trademark)" series, or a non-woven cloth or felt of "NEWLASTAN (registered trademark)" series is preferably formed by the flame-resistant fiber containing the repeating unit of the flame-resisting structure represented by the formula (I), from the viewpoint of the effects of the invention.

When a sputtered sheet of "LASTAN (registered trademark)" series is adopted, the sheet preferably has a thickness of 0.7 to 1.1 mm, preferably has a basis weight of 380 to 800 g/m², and/or preferably has a volume resistivity of 10⁸ to 10¹⁰ Ω·cm as measured by JIS K 6911, from the viewpoint of the effects of the invention.

When a non-woven cloth of "NEWLASTAN (registered trademark)" series is adopted, the cloth preferably has a thickness of 0.5 to 0.8 mm, preferably has a basis weight of 40 to 80 g/m², and/or preferably has a volume resistivity of 10⁸ to 10¹⁰ Ω·cm as measured by JIS K 6911, from the viewpoint of the effects of the invention.

When felt of "NEWLASTAN (registered trademark)" series is adopted, the felt preferably has a thickness of 2 to 6 mm, preferably has a basis weight of 130 to 500 g/m², and/or preferably has a volume resistivity of 10⁸ to 10¹⁰ Ω·cm as measured by JIS K 6911, from the viewpoint of the effects of the invention.

The covering procedure of the cell or the assembly with the flame-resistant fiber is not particularly limited, and various techniques, for example, adhesion, connection, fitting, engaging, spraying, contact charging, friction charging, flocking, packaging, inner lining or outer lining of an outer package or a housing, folding, integral molding, printing, and sealing, etc., may be used.

When the non-woven cloth or the felt including the flame-resistant fiber is used, the cell or the assembly may be enclosed with the non-woven cloth or the felt, the non-woven cloth or the felt may be placed as an inner liner or an outer liner of an outer package or a housing, or the non-woven cloth or the felt may be inserted into or bonded to the cell or the assembly, regardless of completion of tight sealing. The flame-resistant fiber itself may be insulating, and thus a terminal, a cable or a tab for electrical integration or electrical connection may be exposed when covering of the cell or the assembly with the flame-resistant fiber.

### (Positive electrode)

A positive electrode generally includes a positive electrode current collector, and a positive electrode material-containing layer placed on the positive electrode current collector. The dimensions of the positive electrode current collector and the positive electrode material-containing layer can be determined depending on the cell shape. The positive electrode current collector here used may be a metal material which does not tend to dissolve during charge and discharge, and is preferably, for example, aluminum foil when the cell is a lithium ion secondary battery.

The positive electrode material-containing layer can be placed on one surface or both surfaces of the current collector, can be formed in the form of a single layer or multiple layers on the current collector, and/or can be placed on the entire surface of the current collector or in a pattern shape.

The positive electrode material is not particularly limited, and examples thereof include lithium-containing composite oxides such as LiCoO₂, LiNiO₂, spinel type LiMnO₄, olivine type LiFePO₄, and lithium-nickel-manganese-cobalt composite oxide. The positive electrode material-containing layer may include a binder material and/or a conductive aid, in addition to the positive electrode material.

### (Positive electrode terminal)

The positive electrode terminal can be formed in order to electrically integrate the positive electrode and an external power source. The positive electrode terminal may be the same in material as the positive electrode current collector, and can be connected to the positive electrode current collector, can be integrally molded with the positive electrode current collector, or can be configured as an end of the positive electrode current collector. The positive electrode terminal and a lead tab connected with the positive electrode terminal can form a positive electrode lead body and can be connected to the positive electrode current collector.

### (Negative electrode)

A negative electrode generally includes a negative electrode current collector, and a negative electrode material-containing layer placed on the negative electrode current collector. The dimensions of the negative electrode current collector and the negative electrode material-containing layer can be determined depending on the cell shape. The negative electrode current collector here used may be a metal material which does not tend to dissolve during charge and discharge, and is preferably, for example, copper foil when the cell is a lithium ion secondary battery.

The negative electrode material-containing layer can be placed on one surface or both surfaces of the current collector, can be formed in the form of a single layer or multiple layers on the current collector, and/or can be placed on the entire surface of the current collector or in a pattern shape.

The negative electrode material is not particularly limited, and examples thereof include carbon materials such as a graphite substance, a carbon substance having a difficult graphitization characteristic, an easily graphitizable carbon substance, and a composite carbon body; silicon, tin, metallic lithium, and various alloy materials. The negative electrode material-containing layer may include a binder material and/or a conductive aid, in addition to the negative electrode material.

### (Negative electrode terminal)

The negative electrode terminal can be formed in order to electrically integrate the negative electrode and an external power source. The negative electrode terminal may be the same in material as the negative electrode current collector, and can be connected to the negative electrode current collector, can be integrally molded with the negative electrode current collector, or can be configured as an end of the negative electrode current collector. The negative electrode terminal and a lead tab connected with the negative electrode terminal can form a negative electrode lead body and can be connected to the negative electrode current collector.

### (Electrolytic solution and electrolyte)

The electrolytic solution is not particularly limited, and an electrolytic solution in which an electrolyte is dissolved in an organic solvent can be used. The electrolytic solution is preferably non-aqueous (provided that inclusion of water as an inevitable impurity is not excluded). Examples of the organic solvent include carbonate-based solvents such as propylene carbonate, ethylene carbonate, dimethyl carbonate, diethyl carbonate, ethyl methyl carbonate, or a mixture thereof. Examples of the electrolyte include lithium salts such as LiClO₄, LiBF₄, and LiPF₆.

### (Separator)

The cell preferably includes a separator between positive and negative electrodes from the viewpoint of safety such as short-circuit prevention of positive and negative electrodes, shutdown, or the like. In the first and second embodiments, a separator included in a known non-aqueous secondary battery may be used, and an insulating thin film is preferably used, from the viewpoint of ion permeability and mechanical strength.

Examples of the separator include a woven fabric, a non-woven cloth, and a microporous membrane made of a synthetic resin, and in particular, a microporous membrane made of a synthetic resin is preferable. Alternatively, use of the non-woven cloth or the felt including the flame-resistant fiber, described above, as the separator also corresponds to one aspect of the present invention.

The microporous membrane made of a synthetic resin is, for example, a polyolefin-based microporous membrane such as a microporous membrane containing mainly polyethylene or polypropylene, or a microporous membrane containing both these polyolefins. Examples of the non-woven cloth include porous membranes made of glass, ceramic, a heat-resistant resin such as polyolefin, polyester, polyamide, liquid crystal polyester, or aramid, and the like.

The separator may be constituted from one microporous membrane of a single layer or multiple layers, or may be constituted by stacking two or more microporous membranes. The separator may also be constituted in the form of a single layer or multiple layers with a mixed resin material of two or more resin materials melt-kneaded.

### (Outer package)

The outer package receives a material of the cell, involving in charge and discharge, for example, the positive electrode material, the negative electrode material, the separator, the positive electrode terminal, the negative electrode terminal, the electrolyte, and/or the electrolytic solution. When the cell is a lithium ion battery, the shape of the cell (i.e., the shape of the outer package) is classified into cylindrical, square, and laminate types.

The flame-resistant fiber is preferably placed inside and/or outside the outer package, from the viewpoint of the effects of the invention. Specifically, the fiber structure article, for example, the sheet, the paper, the woven fabric, the knit fabric, the non-woven cloth or the felt including the flame-resistant fiber, described above, can be mounted as an inner liner and/or an outer liner of the outer package, on the outer package. In the inner liner of the outer package, the fiber structure article may be entirely or partially in direct contact with a material of the cell, involving in charge and discharge, or may be apart from a material of the cell, involving in charge and discharge.

When the cell is a cylindrical cell, the positive electrode material, the negative electrode material, the separator, the positive electrode terminal, the negative electrode terminal, an insulating material, a gas exhaust valve, a gasket, a positive electrode cap, and/or the like can be received in a cylindrical can. A cylindrical outer package such as a cylindrical can is preferably such that the fiber structure article including the flame-resistant fiber, as described above, is entirely or partially inserted or bonded inside and/or outside the periphery portion of a cylindrical portion or the like, from the viewpoint of success in a thermal runaway insulation test.

When the cell is a square cell, the positive electrode material, the negative electrode material, the separator, the positive electrode terminal, the negative electrode terminal, an insulating material, a gas exhaust valve, and/or the like can be received in a square can. A square outer package such as a square can is preferably such that the fiber structure article including the flame-resistant fiber, as described above, is entirely or partially inserted or bonded, for example, inside and/or outside at least one surface of the square outer package, from the viewpoint of heat insulating properties, and is more preferably such that the fiber structure article is placed as an explosion-prevention valve cover so as to cover a valve on a surface where the valve is formed, for explosion-prevention reasons.

The cylindrical can or the square can is formed by a known material as long as it has a cylindrical or square shape, and can be formed by a metal material such as stainless steel (SUS), iron, aluminum, or an alloy thereof.

When the cell is a laminate cell, the positive electrode material, the negative electrode material, the separator, the positive electrode terminal, the negative electrode terminal, and/or the like can be received in an outer packaging film. Examples of the outer packaging film include an aluminum film in which a polyethylene terephthalate film is stacked. When the cell is a pouch cell, a material of the cell, involving in charge and discharge, can be accommodated in a pouch formed by the same material as in the outer packaging film, and the fiber structure article including the flame-resistant fiber, as described above, is preferably placed inside and/or outside the pouch, for explosion-prevention reasons.

The method for sealing the outer package can be a method such as engaging, welding, screw fastening, or vis fastening of the can and a lid when the cylindrical can or the square can is used, and the sealing method can be a method such as heat sealing or impulse sealing when a laminate packaging material is used.

### (Assembly, cell unit, electricity storage module)

An assembly can be formed by arranging a plurality of the cells so that the cells are electrically in series, in parallel, or in combination thereof. The cell unit according to the second embodiment can be obtained by covering the assembly with the flame-resistant fiber. An electricity storage module can be formed by accommodating the cell(s), the cell unit(s), or a combination thereof in a housing. A cell pack or a battery pack can be formed by accommodating a plurality of the electricity storage modules in a housing.

The cell unit preferably has at least one configuration represented by the following (u1) to (u6) from the viewpoint of the effects of the invention:
(u1) a configuration in which the entire assembly or the entire cell unit is covered with the flame-resistant fiber, for example, a mode in which the entire electricity storage module is covered with the flame-resistant fiber or its molded article, a mode in which the entire battery pack is covered with the flame-resistant fiber or its molded article, a mode in which the entire housing includes the flame-resistant fiber, or a mode in which the whole outer surface of a housing is covered with the flame-resistant fiber or its molded article;
(u2) a configuration in which the assembly or the cell unit is partially covered with the flame-resistant fiber, for example, only one portion of a housing is covered with a molded article of the flame-resistant fiber, the flame-resistant fiber is integrally molded with one portion of a housing, the flame-resistant fiber or its molded article is sandwiched between adjacent cells in one electricity storage module, the flame-resistant fiber or its molded article is sandwiched between adjacent modules in one battery pack, or only a curved section of a cylindrical housing is covered with the flame-resistant fiber or its molded article;
(u3) a configuration in which the assembly or the cell unit is directly covered with the flame-resistant fiber, for example, a mode in which the assembly of the cells is in direct contact with the flame-resistant fiber, or a molded article of the flame-resistant fiber is inserted or bonded as an inner liner of a housing for an electricity storage module or a battery pack;
(u4) a configuration in which the flame-resistant fiber is sandwiched between the cells in the assembly, for example, the flame-resistant fiber or its molded article is inserted or bonded between the cells where a material involving in charge and discharge is accommodated in an outer package, in an electricity storage module;
(u5) a configuration in which the cell unit includes a plurality of the assemblies and the flame-resistant fiber is sandwiched between the assemblies, for example, the flame-resistant fiber or its molded article is inserted or bonded between electricity storage modules individually accommodated in respective housings, or the flame-resistant fiber or its molded article is inserted or bonded between battery packs individually accommodated in respective housings; and
(u6) a configuration in which the assembly or the cell unit is accommodated in a housing and the flame-resistant fiber is placed inside and/or outside the housing.

The configurations represented by (u1) to (u6) described above may co-exist or may be overlapped in one cell unit, as exemplified.

Optionally, the cell according to the first embodiment may be plurally used to form an assembly, and furthermore the assembly formed may be covered with the heat-resistant fiber.

Optionally, the cell unit according to the second embodiment, and a cell or an assembly of cells, which is not covered with any heat-resistant fiber, may be combined and furthermore covered with the heat-resistant fiber.

Optionally, the cell according to the first embodiment may be singly or plurally prepared and may be combined with the cell unit according to the second embodiment and/or the other cell or an assembly of cells, which is not covered with any heat-resistant fiber, and furthermore covered with a heat-resistant fiber.

The assembly or the cell unit may be accommodated in a housing. The housing may be formed by the same material, shape and production method as those of the outer package of the cell described above, and is preferably square or cylindrical, more preferably square, from the viewpoint of mounting properties of the electricity storage module, the cell pack or the battery pack.

The flame-resistant fiber is preferably placed inside and/or outside a housing, for the reasons of heat insulating properties or explosion prevention. Specifically, the fiber structure article, for example, the sheet, the paper, the woven fabric, the knit fabric, the non-woven cloth or the felt including the flame-resistant fiber, described above, can be mounted, as an inner liner and/or an outer liner of a housing, on the housing. In the inner liner of the housing, the fiber structure article may be entirely or partially in direct contact with a single cell or an assembly of a plurality of cells, or may be apart from a single cell or an assembly of a plurality of cells. In the outer lining of the housing, the fiber structure article can be placed as an explosion-prevention valve cover so as to cover a valve on a housing surface where the valve is formed, can constitute one portion of the housing, and/or can be integrally molded with the housing.

An electricity storage module, a cell pack or a battery pack including the cell according to the first embodiment and/or the cell unit according to the second embodiment can allow for prevention of flame spreading or fire spreading in a safety test such as a nailing test, and thus can be used in the field where flame resistance, heat resistance, burning resistance, and/or the like are/is demanded, and can be mounted in mobile equipment, vehicles, constructions, tools, or the like.

## Claims

1. A cell, wherein at least one portion of a cell surface is covered with a flame-resistant fiber, and the flame-resistant fiber is in direct contact with the cell surface and/or is apart from the cell surface.

2. The cell according to claim 1, wherein the entire of the cell is covered with the flame-resistant fiber.

3. The cell according to claim 1, wherein the cell is partially covered with the flame-resistant fiber.

4. The cell according to claim 1, wherein the cell is directly covered with the flame-resistant fiber.

5. The cell according to claim 1, wherein the cell is indirectly covered with the flame-resistant fiber.

6. The cell according to any one of claims 1 to 5, wherein the flame-resistant fiber is placed inside and/or outside an outer package of the cell.

7. The cell according to any one of claims 1 to 6, wherein the flame-resistant fiber is in the form of a sheet, paper, a woven fabric, a knit fabric, a non-woven cloth, or felt.

8. The cell according to claim 7, wherein the flame-resistant fiber is in the form of the felt, and the felt has a thickness of 1 to 10 mm, a basis weight of 100 to 600 g/m², and a bulk density of 55 to 90 kg/m³.

9. The cell according to any one of claims 1 to 8, wherein the flame-resistant fiber is an organic fiber having flame retardance, heat resistance, and prevention properties of flame spreading.

10. A cell unit, wherein an assembly of a plurality of the cells according to any one of claims 1 to 9 is covered with the flame-resistant fiber.

11. A cell unit, wherein an assembly of a plurality of cells is covered with a flame-resistant fiber.

12. The cell unit according to claim 11, wherein the entire of the assembly or the entire of the cell unit is covered with the flame-resistant fiber.

13. The cell unit according to claim 11, wherein the assembly or the cell unit is partially covered with the flame-resistant fiber.

14. The cell unit according to claim 11, wherein the assembly or the cell unit is directly covered with the flame-resistant fiber.

15. The cell unit according to claim 11, wherein the flame-resistant fiber is sandwiched between the cells.

16. The cell unit according to claim 11, wherein the cell unit comprises a plurality of the assemblies, and the flame-resistant fiber is sandwiched between the assemblies.

17. The cell unit according to any one of claims 11 to 16, wherein the assembly or the cell unit is accommodated in a housing, and the flame-resistant fiber is placed inside and/or outside the housing.

18. The cell unit according to any one of claims 11 to 17, wherein the flame-resistant fiber is in the form of a sheet, paper, a woven fabric, a knit fabric, a non-woven cloth, or felt.

19. The cell unit according to claim 18, wherein the flame-resistant fiber is in the form of the felt, and the felt has a thickness of 1 to 10 mm, a basis weight of 100 to 600 g/m², and a bulk density of 55 to 90 kg/m³.

20. The cell unit according to any one of claims 11 to 19, wherein the flame-resistant fiber is an organic fiber having flame retardance, heat resistance, and prevention properties of flame spreading.

21. A cell unit, wherein a single cell or an assembly of a plurality of cells, and the cell unit according to any one of claims 11 to 20 are covered with the flame-resistant fiber.

22. A cell unit, wherein the cell according to any one of claims 1 to 9 and the cell unit according to any one of claims 10 to 20 are covered with the flame-resistant fiber.
